(19) **Europäisches Patentamt** / **European Patent Office** / **Office européen des brevets**

(11) **EP 1 149 378 B1**

(12) **EUROPEAN PATENT SPECIFICATION**

| | |
|---|---|
| (45) Date of publication and mention of the grant of the patent:<br>**29.06.2011 Bulletin 2011/26** | (51) Int Cl.:<br>**G11B 20/00** (2006.01)   **H04N 5/913** (2006.01) |
| (21) Application number: **00972667.0** | (86) International application number:<br>**PCT/EP2000/009606** |
| (22) Date of filing: **28.09.2000** | (87) International publication number:<br>**WO 2001/026110 (12.04.2001 Gazette 2001/15)** |

(54) **EMBEDDING AND DETECTING WATERMARKS IN ONE-DIMENSIONAL INFORMATION SIGNALS**

EINBETTUNG UND DETEKTION VON WASSERZEICHEN IN EINDIMENSIONALEN INFORMATIONSSIGNALEN

INCORPORATION ET DETECTION DES FILIGRANES DANS DES SIGNAUX D'INFORMATIONS UNIDIMENSIONNELLES

(84) Designated Contracting States:
**DE ES FR GB IT**

(30) Priority: **06.10.1999 EP 99203258**

(43) Date of publication of application:
**31.10.2001 Bulletin 2001/44**

(73) Proprietor: **Koninklijke Philips Electronics N.V.**
**5621 BA Eindhoven (NL)**

(72) Inventors:
 • **RONGEN, Peter, M., J.**
 **NL-5656 AA Eindhoven (NL)**
 • **VAN OVERVELD, Cornelis, W., A., M.**
 **NL-5656 AA Eindhoven (NL)**
 • **MAES, Maurice, J., J., J-B.**
 **NL-5656 AA Eindhoven (NL)**
 • **GOEY, Zoe, M., K., Y.**
 **NL-5656 AA Eindhoven (NL)**

(74) Representative: **Schmitz, Herman Jan Renier**
**Philips**
**Intellectual Property & Standards**
**P.O. Box 220**
**5600 AE Eindhoven (NL)**

(56) References cited:
| | |
|---|---|
| EP-A- 0 565 947 | WO-A-98/33324 |
| WO-A-99/35836 | US-A- 4 706 282 |
| US-A- 4 914 694 | US-A- 5 933 798 |

**Description**

The invention relates to a method and arrangement for embedding a watermark in an information signal in accordance with the preamble of the claims 1, 2 and 11, respectively. The invention also relates to a method and arrangement for detecting such a watermark in an information signal in accordance with the preamble of the claims 7 and 12, respectively.

Such methods and arrangements are disclosed by WO-A-99/35836.

With the advent of modem audio compression standards such as MP3, the danger of piracy and illegal use of audio contents is growing. Therefore, the industry is eager to find means of protection against illegal activities. Watermarking is a method of certifying ownership of digital multimedia contents such as images, video, audio, text and data. It is a tool for realizing copy protection.

Usually, a watermark is embedded by adding a specific low-amplitude noisy pattern to the signal. The noisy pattern represents the watermark. The presence or absence of an embedded given watermark in a suspect signal is detected at the receiver end by computing the correlation of the suspect image with an applied version of said watermark, and comparing the correlation with a threshold. If the correlation is larger than the threshold, the applied watermark is said to be present, otherwise it is said to be absent.

It is an object of the invention to provide a novel method and apparatus for embedding a watermark in a one-dimensional information signal, and a corresponding method and apparatus for detecting the watermark in a suspect signal.

The invention to this effect provides a method of embedding a watermark in an information signal, comprising the steps of:

- determining salient points of the information signal,
- modifying the information signal by moving salient points to positions where they have a predetermined statistical correlation with an applied watermark signal, characterized in that the information signal is a one-dimensional signal, that the watermark signal is a binary time-dependent signal and that the step of modifying the information signal comprises time-warping salient points so as to coincide with a predetermined value of the binary watermark signal.

The invention further provides a method of embedding a watermark in an information signal, comprising the steps of:

- determining salient points of the information signal,
- modifying the information signal by moving salient points to positions where they have a predetermined statistical correlation with an applied watermark signal, characterized in that the information signal is a one-dimensional signal, that the watermark signal is a real-valued time-dependent signal and that the step of modifying the information signal comprises time-warping salient points in the direction of a nearest maximum of the watermark signal.

Salient points of a signal are herein understood to mean the temporal locations of points of interest of a given saliency function. A saliency function is a function that assigns a saliency measure to each audio signal sample. The saliency function is quite arbitrary, provided that the saliency measure is a local property (i.e. depends only on a small neighboring time interval), and is preserved as much as possible under signal operations such as compression, noise addition, cut and paste, translation, sub-sampling, scaling, etc. A simple but yet illustrative and useful example of salient points is zero crossings of an audio signal.

The watermark signal can be thought of as a binary signal, the 0 and 1 values of which are sufficiently random and uniformly distributed. Since there is no correlation between the salient points of an arbitrary audio signal and a random watermark signal, 50% of the salient points will coincide with a 1 of the watermark signal. The audio signal is now watermarked by time warping the salient points so that a significant majority of the salient points coincides with a 1 of the watermark signal.

The invention also provides a method of detecting a watermark in an information signal, comprising the steps of:

- determining salient points of the information signal,
- determining the correlation of said salient points with an applied watermark signal, and
- detecting that the applied watermark has been embedded in said information signal if said correlation exceeds a predetermined threshold, characterized in that the applied watermark signal is a binary time-dependent signal and that the step of determining the correlation comprises determining the percentage of salient points that coincide with a predetermined value of the binary watermark signal.

The arrangements for embedding and detecting a watermark according to the invention further are defined by the characterizing parts of claims 11 and 12.

It is to be noted that Applicant's International Patent Application WO-A-99/35836 discloses a method of embedding a watermark in images by warping salient image points. However, the image and the watermark signal are two-dimensional signals in this prior art publication, and geometric warping is applied in the spatial image domain. The inventors of this invention have recognized that similar techniques can be applied to the one-dimensional (e.g. audio) signal domain, the watermark signal being a time-dependent signal and the warping operation being carried out in the time domain.

US-A-5,933,798 discloses a method of embedding a watermark in a one-dimensional signal, comprising the steps of:

- determining salient points of the information signal,
- modifying the information signal so that the salient points of the modified signal have a statistically significant correlation with an applied watermark signal.

Further aspects of the invention relating to advantageous embodiments for deriving salient points and different watermark signal formats are apparent from and will be elucidated with reference to the embodiments described hereinafter.

BRIEF DESCRIPTION OF THE DRAWINGS

Fig. 1 shows schematically an arrangement for embedding a binary-valued watermark in accordance with the invention.

Figs. 2 and 3 show waveforms to illustrate the operation of the watermark embedder which is shown in Fig. 1.

Fig. 4 shows schematically an arrangement for detecting a watermark in accordance with the invention.

Fig. 5 shows an embodiment of the watermark embedder including a pre-processing circuit, and Fig. 6 shows an embodiment of the detector including such a circuit.

Figs. 7 and 8 show waveforms to illustrate the operation of the embedder and the detector which are shown in Figs. 5 and 6.

Fig. 9 shows an embodiment of the pre-processing circuit.

Fig. 10 shows schematically a further embodiment of the watermark embedder in accordance with the invention.

Fig. 11 shows waveforms to illustrate the operation of an arrangement for embedding a real-valued watermark signal.

Fig. 12 shows schematically a generic arrangement for detecting a watermark in accordance with the invention.

Fig. 13 shows a device for playing back an audio signal, comprising a watermark detector in accordance with the invention.

DESCRIPTION OF EMBODIMENTS

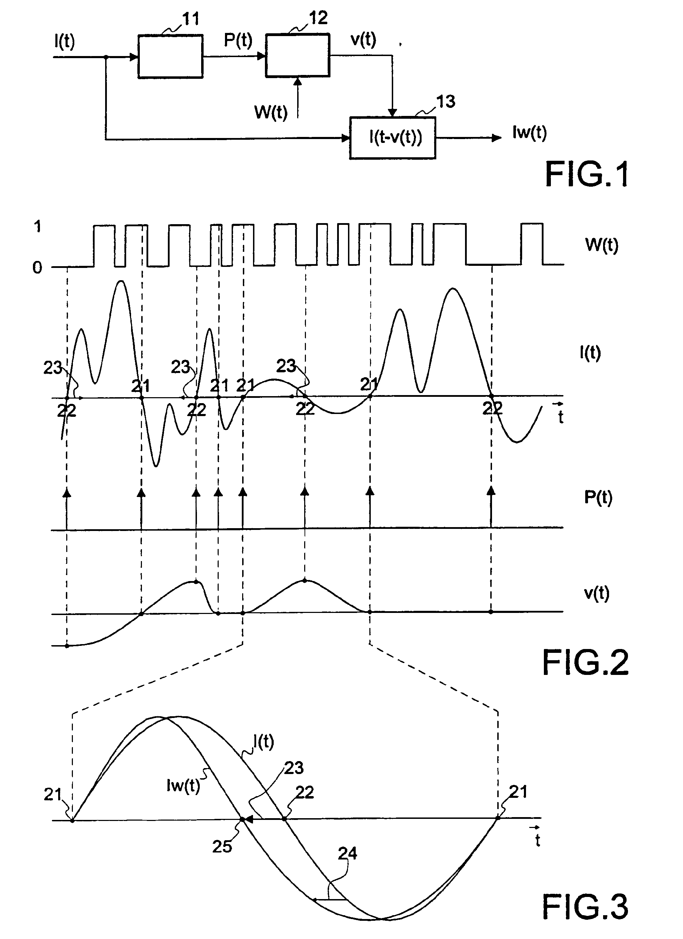

Fig. 1 shows schematically a watermark embedder in accordance with the invention. The embedder receives an audio signal I(t) and a watermark signal W(t) to be embedded in said audio signal. The audio signal I(t) and the watermark signal W(t) are continuous functions of time and have a duration T. In practice, the audio signal will be applied in digital form. Its digital representation has a finite number N of audio samples $I(t_i)$ taken at discrete points of time $t_i$. The time period between two successive time samples $t_i$ and $t_{i+1}$ is constant and denoted $\Delta T$. The truly continuous signal I(t) is derived from the digital signal by interpolation or sub-sampling (not shown). The watermark signal W(t) is a binary signal in this embodiment. Its transitions are assumed to lie in the middle of sampling periods $\Delta T$.

The arrangement comprises a salient point extractor **11,** a warp signal generator **12,** and a modifier circuit **13.** Its operation will be described with reference to waveforms that are shown in Figs. 2 and 3. Fig. 2 shows the watermark signal W(t) and the audio signal I(t). The salient point extractor **11** extracts salient points from the audio signal. The instants of time when salient points occur are referred to as $s_i$. A simple but yet practical example of the salient points extractor is a zero-cross detector which produces a Dirac pulse for each zero crossing. The series of Dirac pulses defining the locations of the salient points constitutes a salient point signal P(t) which is also shown in Fig. 2.

Some salient points coincide with a "1" of the watermark signal W(t). These salient points are said to lie "on" the watermark. Other salient points coincide with a "0" of the watermark signal W(t). They are said to lie "off" the watermark. The 0s and 1s of the watermark signal are sufficiently random and uniformly distributed across the signal, with equal probability. Due to this property signal, about 50% of the salient points will lie on the watermark and 50% will not. The audio signal shown in Fig. 2 has four salient points **21** on the watermark and four salient points **22** off the watermark.

As will be described hereinafter, the embedder moves the salient points not lying on the watermark along the time axis, such that afterwards the majority of salient points lies on the watermark. This type of processing is known in the art as "time warping". In Fig. 2, the process of time warping salient points is illustrated by arrows **23** denoting the direction and extent by which the salient points are moved away from their original positions.

The direction and extent by which the audio signal is to be warped is controlled by the warp signal generator **12**. This circuit receives the salient point signal P(t) from the salient point extractor **11** and the watermark signal W(t). It determines a time warp vector $v(s_i)$ to be applied to each salient point $s_i$ and calculates the value of the time warp v(t) for all other values of t. The time warp v(t) is a continuous signal and is referred to as the continuous warp signal v(t).

In a practical embodiment of the warp signal generator **12**, the warp $v(s_i)$ to be applied to a salient point is generally defined as:

$$v(s_i) = c.\Delta T.(1 - W(s_i)).\text{sign}(W(t_{i+1}) - W(t_i)),$$

where $t_i$ and $t_{i+1}$ are successive sampling points of the digital audio signal and $\Delta T = t_{i+1} - t_i$ is the sampling period. Note that the term $(1 - W(s_i))$ in this equation prevents salient points already lying on the watermark from being warped. The quantity c in the equation represents the embedding strength. The larger c is, the more a salient point is moved away from its initial position. To avoid audible jitter in the watermarked signal, c should be as small as possible. For robustness of the watermark, c should be large. Note that c can be chosen in order to mask the audibility of the watermark in accordance with a human psycho-acoustic model.

The audio signal values between the salient points are to be warped by an amount which gradually declines from $v(s_i)$ for salient points lying off the watermark to zero for salient points already lying on the watermark. To this end, the warp signal generator **12** derives the continuous warp signal v(t), which defines the warp to be applied at time t, from the discrete warps $v(s_i)$ by applying a suitable form of interpolation. The continuous warp signal v(t) should be as smooth as possible. This is achieved by an appropriate interpolation algorithm. The waveform v(t) shown in Fig. 2 is an example.

The warping is actually carried out by the modification circuit **13**. This circuit receives the audio signal I(t) and the continuous warp signal v(t) and produces the watermarked signal $I_w(t)$ in accordance with:

$$I_w(t) = I(t - v(t)).$$

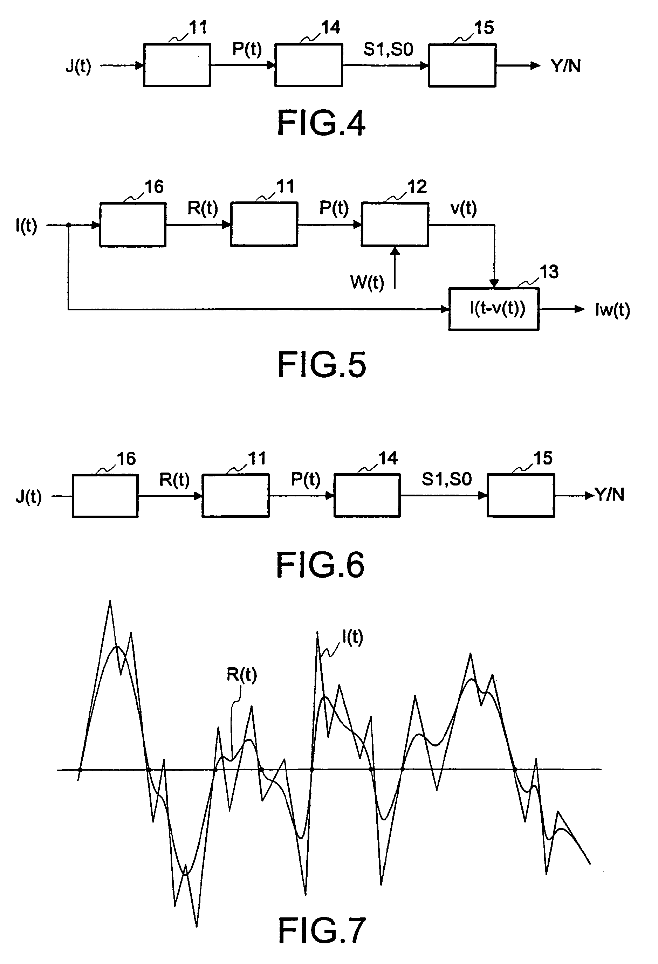

Fig. 4 shows this operation for a small part of the audio signal. In this Figure, I(t) is the unwatermarked audio signal and $I_w(t)$ is the watermarked signal. The salient points **21** lying on the watermark are not warped (v(t)=0). Salient point **22** lies off the watermark and is warped by the amount c.$\Delta T$ so as to constitute a salient point **25** of $I_w(t)$. The other audio signal values are warped by an amount v(t) which gradually declines from c.$\Delta T$ to zero. Reference numeral **24** denotes v(t) for an arbitrary instant of time. Discrete audio output samples of the watermarked signal are eventually obtained by computing $I_w(t_i)$ from the above equation.

Note that, for a given maximal embedding strength, warping does not necessarily cause all the salient points of the watermarked signal to lie on the watermark. Some salient points will generally lie too far from transitions of the watermark signal to become points on the watermark after warping by c.$\Delta T$. Such salient points are said to be "unwarpable". The occurrence of unwarpable salient points is a typical property of binary watermark signals. In Fig. 2, the extreme left one and the extreme right one of the salient points **22** are unwarpable. It is possible to refrain from warping these salient points, but it is not certain beforehand whether this yields the best performance in terms of perceptibility of the embedded watermark. Sometimes, it is preferred to warp unwarpable salient points (note the contradiction of this wording) in order to render the warp signal v(t) as smooth as possible. In Fig. 2, the extreme left one of the salient points **22** is warped whereas the extreme right one is not. It is also possible to recursively repeat the warping operation until a desired number of salient points lies on the watermark, or to warp each salient point $s_i$ to the closest time sample $t_j$ for which $W(t_j)=1$.

Fig. 4 shows schematically the corresponding watermark detector in accordance with the invention. The detector receives a suspect audio signal J(t) and comprises the same salient point extractor **11** as the embedder, a matching circuit **14**, and a decision circuit **15**. The matching circuit **14** receives the salient point signal P(t) and the watermark signal W(t) to be detected. It counts the number $S_1$ of salient points lying on the watermark and the number So of salient points lying off the watermark. In mathematical notation:

$$S_1 = \int_0^T P(t)W(t)dt \quad \text{and} \quad S_0 = \int_0^T P(t)\overline{W}(t)dt$$

where T is the duration of the signal. The numbers $S_1$ and $S_0$ are subsequently applied to the decision circuit **15.** If a statistically high percentage of the salient points lies on the watermark, i.e. if $S_1 >> S_0$, the watermark W(t) is said to be present in the suspect signal, otherwise it is not.

Fig. 5 shows a further embodiment of the watermark embedder. This embodiment differs from the one shown in Fig. 1 in that the audio signal I(t) is pre-processed by a pre-processing circuit **16** before being applied to the salient point extractor **11.** The purpose of pre-processing is to derive from I(t) a more robust signal R(t) which varies as little as possible under common audio signal processing operations such as compression. The salient points, and thus the warp signal v(t) are now extracted from the robust signal R(t). However, the actual warping is applied to the original signal I(t).

Fig. 6 shows the corresponding watermark detector. It differs from the one shown in Fig. 4 in that the suspect audio signal J(t) is pre-processed by the same pre-processing circuit **16** before being applied to the salient point extractor **11.**

In a simple embodiment of pre-processing circuit **16,** the robust signal R(t) is a smoothed version of I(t), obtained by low-pass filtering. An example thereof is shown in Fig. 7. Note that R(t) has fewer zero crossings than I(t), but their positions are more stable. The robust signal may also be obtained by band-pass filtering. A motivation for band-pass filtering is that it removes the DC-component from the audio signal so that the embedded watermark is robust against translation of the audio signal along the signal's amplitude axis.

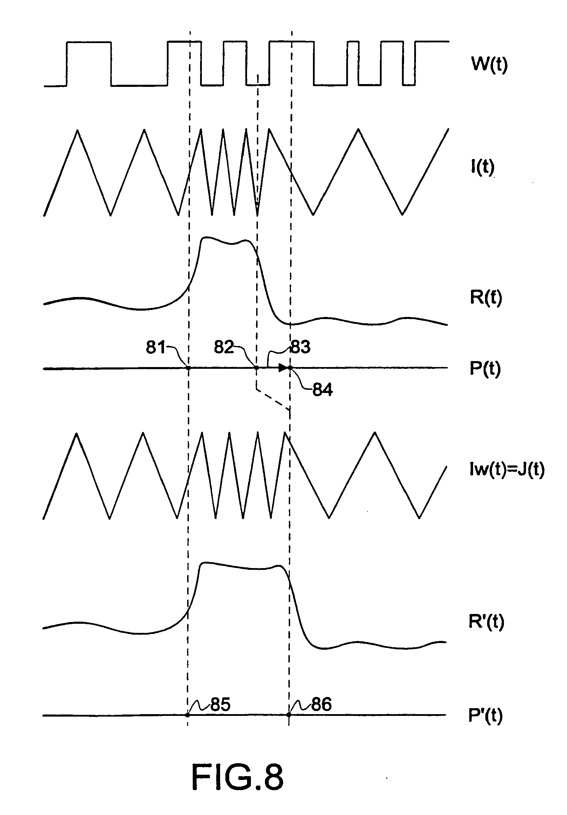

A further embodiment of the pre-processing circuit **16** is based on the recognition that information signals generally convey the so-called "semantic essence" of the information. The semantic essence of a signal is the part of the signal which is to be preserved under whatever distortions introduced by (re)production and (de)coding devices, where these distortions are assumed to be below the human perceptual limit. For audio, and particularly music, one can intuitively think of characteristics such as pitch, loudness, attack, decay, staccato, legato, tremolos, slurs, etc. A signal representing the semantic essence as a function of time is a good example of a robust signal. The salient points extracted from such a robust signal will most likely survive common audio signal processing including compression such as MP3. By way of example, Fig. 8 shows various waveforms to illustrate an embodiment of such a watermark embedder and detector. In this embodiment, the pre-processor **16** extracts the dominant frequency (pitch) of the audio signal, and salient point extractor **11** detects significant changes of said pitch. In Fig. 8, W(t) is the watermark signal, I(t) is the audio signal to be watermarked, R(t) is the robust signal derived from the audio signal and representing the pitch as a function of time, and P(t) is the salient point signal (here shown as points instead of Dirac pulses). The salient points are local extremes of the derivative of the robust signal R(t) in this embodiment. As the Figure shows, salient point 81 lies already on the watermark and is therefore not warped. Salient point **82** lies off the watermark and is warped by an amount **83** to a new location **84.** $I_w(t)$ is the watermarked signal. It is also the suspect signal J(t) applied to the detector. R'(t) is the robust signal derived from J(t) in the detector, and P'(t) is the salient point signal as extracted in the detector. The salient points are **85** and **86.** Both salient points now lie on the watermark and the detector will thus decide that the watermark W(t) is indeed embedded.

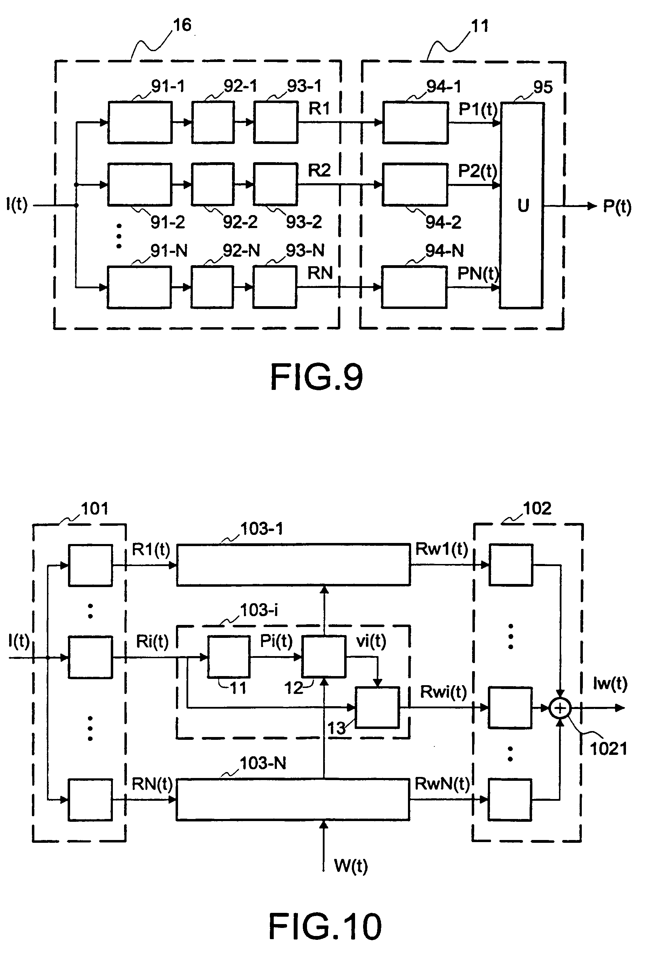

Instead of using one robust signal for the extraction of salient points, it may be useful to have an array of robust signal components. A filter bank can construct such an array of signal components. There are two reasons to believe that such an array is robust. First, splitting up the audio signal in frequency bands provides protection against attacks that damage the watermarked signal in a specific frequency range. Secondly, the human ear can actually be modeled by a filter bank. If the signal is corrupted in such a manner that the filter outputs are affected, the human ear will detect this. Fig. 9 shows schematically an arrangement of pre-processor **16** and salient point extractor **11** along these lines. The arrangement comprises N band-pass filters **91-1...91-N.** The different frequency components are squared **(92-1..92-N)** and then each fed to a respective low-pass filter **93-1..93-N** which computes a moving average. The outputs $R_1..R_N$ of this process collectively form the array of robust signal components. The components actually represent the energy-time development of the signal in the different frequency bands. The outputs $R_i$ are each subjected to salient point extraction **(94-1..94-N).** Here, salient points are points of time at which the second derivative of $R_i$ is zero and the first derivative is large. The salient point signal P(t) is the conjugation **(95)** of the salient points of all $R_i$s.

In the above examples of the watermark embedder with a pre-processing circuit **16** for creating a robust signal R(t), the actual warping is still applied to the original audio signal I(t). The inventors have found that warping may also be applied to the robust signal itself, provided that the audio signal can be reconstructed from said robust signal. The latter condition is fulfilled, for example, if the robust signal is an array of signals obtained from an analysis filter bank which, in combination with a complementary synthesis filter bank, constitutes a perfect reconstructing (in terms of perceptibility) filter bank. Fig. 10 shows an embodiment of such a watermark embedder. The arrangement comprises an analysis filter bank **101** and a synthesis filter bank **102,** collectively forming a perfect reconstructing filter bank. Such filter banks are known in the art. The analysis filter bank **101** provides a plurality of signals $R_1(t)..R_N(t)$ that are each applied to a respective one of watermark embedders **103-1..103-N.** As has been shown in more detail for embedder **103-i,** each embedder has the structure and function of the embedder which is shown in Fig. 1. All embedders receive the same watermark signal W(t) and modify the respective $R_i(t)$ into a warped signal $R_{wi}(t)$ in response to the salient points that were found in the signal. The synthesis filter bank **102** receives the watermarked components and synthesises the watermarked audio signal $I_w(t)$. The embedders **103-i** may also be located in the synthesis filter bank **102** between the synthesis filter - and - conjugation circuit **1021.**

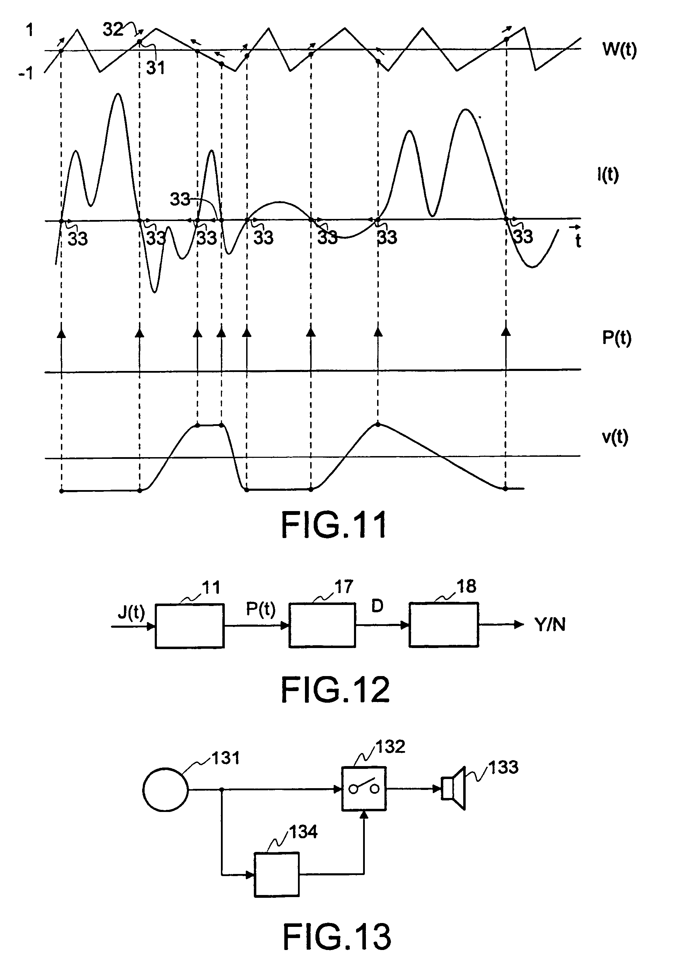

It has already been noted that binary watermark signals have the property that a number of salient points is unwarpable. They lie too far from transitions of the watermark signal to become points on the watermark after warping by an amount c.ΔT. Real-valued watermark signals W(t) do not have this property. Real-valued watermark signals have real values between, for example, -1 and +1. The values are uniformly distributed, the polarity of the signal changes sufficiently often, and the signal is preferably nowhere constant. An example is shown in Fig. 11. In this example, the watermark is defined as a set of -1 and +1 values along the time axis. The continuous watermark signal W(t) is obtained therefrom by linear interpolation. The average of W(t) should be 0.

Fig. 11 shows the same audio signal I(t) and corresponding salient point signal P(t) as shown in Fig. 2. The salient points are also shown in the watermark signal waveform as dots **31.** For the unwatermarked signal I(t), the correlation D of the watermark signal W(t) and the salient point signal P(t) equals approximately zero:

$$D = \int_0^T W(t)P(t)dt = 0$$

where T is the duration of the audio signal. The audio signal is now watermarked by warping the salient points "up-hill", i.e. towards the maxima of W(t) as illustrated by arrows **32** in Fig. 11. The discrete warps $v(s_i)$ to be applied to the salient points at the times $t=s_i$ is denoted by arrows **33.** The warps $v(s_i)$ are now defined by:

$$v(s_i) = c.\Delta T.\text{sign}(W(t_{i+1}) - W(t_i))$$

where $t_i$ and $t_{i+1}$ are successive sampling points of the digital audio signal and ΔT is the sampling period. Note that almost all salient points will now be warped, in contrast to the warp signal for binary-valued watermark signals. Also note that the expression sign() in the above equation defines the direction of the warp. If the watermark signal W(t) is smooth, the discrete warps $v(s_i)$ can also be defined as:

$$v(s_i) = c.\Delta T.\text{sign}\left(\frac{dW(s_i)}{dt}\right)$$

The watermark embedder further operates in the same manner as described before. Accordingly, a smooth continuous warp function v(t) is derived from $v(s_i)$ by interpolation, and the audio signal is warped in accordance with:

$$I_w(t) = I(t - v(t)).$$

The effect of warping the salient points "up-hill" with respect to the watermark signal W(t) is that the correlation

$$D = \int_0^T W(t)P(t)dt$$

for the warped (i.e. watermarked) audio signal will significantly deviate from zero. For this reason, the quantity D is also referred to as the detection strength. The watermark detector calculates the correlation D for the received suspect signal. The watermark is said to be present if D is larger than some threshold $D_t$.

A suitable value for $D_t$ follows from the following observation. We consider a class of watermark signals such that, if the correlation D is calculated for all watermarks in said class, then D will have a normal distribution with mean value $\mu(D)$ and standard deviation $\sigma(D)$. Given said mean value and standard deviation, the normal distribution of D can be transformed into a standard normal distribution of D' having mean value 0 and standard deviation 1, where

$$D' = \frac{D - \mu(D)}{\sigma(D)} \ .$$

The threshold $D'_t$ corresponding to $D_t$ can be calculated for any desired false alarm probability P (a false alarm is the situation where a watermark is detected in an unwatermarked signal). For example, a threshold $D'_t \approx 5$ is to be used for $P=10^{-6}$.

Fig. 12 shows schematically a watermark detector which carries out the above described operations. The detector comprises the same salient point extractor 11 as shown in Fig. 4, a correlation detector 17 for calculating the correlation D as a function of the watermark signal W(t) and salient point signal P(t) in accordance with the equation defined above, and a decision circuit 18 which compares the correlation D with a threshold $D_t$.

The detector shown in Fig. 12 is a generic watermark detector. The arrangement can also be used for the detection of binary-valued watermarks. This follows from the observation that the criterion for the presence of a binary-valued watermark, i.e.

$$S_1 - S_0 = \int_0^T P(t)W(t)dt - \int_0^T P(t)\overline{W}(t)dt \gg 0 \ , \text{ where } W(t)=\{0,1\}$$

is mathematically equivalent to

$$D = \int_0^T P(t)W(t)dt \gg 0 \ , \text{ where } W(t)=\{-1,1\}.$$

It is to be noted that time warping is not the only way of modifying a signal to obtain the desired effect. An alternative is applying amplitude modulation such that the saliency of salient points lying on the watermark is increased and the saliency of salient points lying off the watermark is increased, implying that afterwards the majority of the "strongest" salient points will lie on the watermark. This process can be described as follows:

$$I_\bullet(t) = I(t).(1 + \varepsilon(t))$$

where $\varepsilon(t) \ll 1$ satisfies the following conditions

$$\begin{cases} \varepsilon(t_0) = 0 \text{ if } I(t_0) = 0 \\ \varepsilon(s_i) > 0 \text{ if } W(s_i) = 1 \\ \varepsilon(s_i) < 0 \text{ if } W(s_i) = 0 \end{cases}$$

The watermark which is embedded in the audio signal may identify, for example, the copyright holder or a description of the contents. It allows material to be labeled as 'copy once'. 'never copy', 'no restriction', 'copy no more', etc. Fig. 13 shows a device for playing back an audio bitstream which is recorded on a disc 131. The recorded signal is applied to a reproduction device 133 via a switch 132. It is assumed that the device may not play back video signals with a predetermined embedded watermark, unless other conditions are fulfilled which are not relevant to the invention.

For example, watermarked signals may only be played back if the disc **131** includes a given physical "wobble" key. In order to detect the watermark, the device comprises a watermark detector **134** as described above. The detector receives the recorded signal and controls the switch **132** in response to whether or not the watermark is detected.

In summary, a method and arrangement are disclosed for watermarking in one-dimensional signals, particularly audio signals. The watermark, e.g. a binary signal (W(t)) having uniformly distributed zeroes and ones, is embedded in the audio signal (I(t)) by warping (23) salient points such as zero crossings (22) to such an extent that the statistics of the time distribution of the salient points of the watermarked signal ($I_w(t)$) are significantly changed with respect to the watermark signal.

**Claims**

1.  A method of embedding a watermark (W(t)) in an information signal (I(t)), comprising the steps of:

    - determining (11) salient points (21,22) of the information signal,
    - modifying (13) the information signal by moving (23) salient points to positions where they have a predetermined statistical correlation with an applied watermark signal, **characterized in that** the information signal (I(t)) is a one-dimensional signal, that the watermark signal is a binary time-dependent signal and that the step of modifying the information signal comprises time-warping (12) salient points so as to coincide with a predetermined value of the binary watermark signal.

2.  A method of embedding a watermark (W(t)) in an information signal (I(t)), comprising the steps of:

    - determining salient points (21,22) of the information signal,
    - modifying (13) the information signal by moving (23) salient points to positions where they have a predetermined statistical correlation with an applied watermark signal, **characterized in that** the information signal (I(t)) is a one-dimensional signal, that the watermark signal is a real-valued time-dependent signal and that the step of modifying the information signal comprises time-warping (12) salient points in the direction of a nearest maximum of the watermark signal.

3.  A method as claimed in claim 1 or 2, further comprising a processing step of deriving from said information signal (I(t)) a robust signal (R(t)) representing the semantic essence of the information signal, the salient points of the information signal being represented by the salient points (81,82) of said robust signal.

4.  A method as claimed in claim 3, wherein the processing step comprises decomposing the information signal (I(t)) into a plurality of robust signal components (R1, R2, ... RN) and determining the salient points (P) of each signal component.

5.  A method as claimed in claim 4, wherein said decomposing includes sub-band filtering (91) of the information signal (I(t)).

6.  A method as claimed in claim 4, wherein the step of modifying the information signal comprises modifying (103) each signal component and combining (102) the modified signal components to constitute the modified information signal.

7.  A method of detecting a watermark in an information signal (I(t)), comprising the steps of:

    - determining (11) salient points of the information signal,
    - determining (14) the correlation of said salient points with an applied watermark signal (W(t)), and
    - detecting (15) that the applied watermark has been embedded in said information signal if said correlation exceeds a predetermined threshold, **characterized in that** the applied watermark signal is a binary time-dependent signal and that the step of determining the correlation comprises determining the percentage of salient points that coincide with a predetermined value of the binary watermark signal.

8.  A method as claimed in claim 7, further comprising a processing step of deriving from said information signal a robust signal representing the semantic essence of the information signal, the salient points of the information signal being represented by the salient points of said robust signal.

9. A method as claimed in claim 8, wherein the processing step comprises decomposing the information signal into robust signal components and determining the salient points of each signal component.

10. A method as claimed in claim 9, wherein said decomposing includes sub-band filtering of the information signal.

11. An arrangement for embedding a watermark (W(t)) in a one-dimensional information signal (I(t)), comprising:

- means (11) for determining salient points of the information signal, and
- means (13) for modifying the information signal, by moving salient points to positions where they have a predetermined statistical correlation with an applied watermark signal, **characterized in that** the watermark signal is a binary time-dependent signal and that the means for modifying the information signal comprises means (12) for time-warping salient points so as to coincide with a predetermined value of the binary watermark signal.

12. An arrangement for detecting a watermark (W(t)) in a one-dimensional information signal (I(t)), comprising:

- means (11) for determining salient points of the information signal,
- means (14) for determining the correlation of said salient points with an applied watermark signal, and
- means (15) for detecting that the applied watermark has been embedded in said information signal if said correlation exceeds a predetermined threshold, **characterized in that** the watermark is a binary time-dependent signal and that the means for detecting comprise means for determining the percentage of salient points that coincide with a predetermined value of the binary watermark signal.

13. A device for recording and/or playing back an information signal, comprising means (132) for disabling recording and/or playing back of the information signal in dependence upon the presence of a watermark in said signal, **characterized in that** the device comprises an arrangement (134) for detecting said watermark as claimed in claim 12.

**Patentansprüche**

1. Verfahren zur Einbettung eines Wasserzeichens (W(t)) in ein Informationssignal (I(t)), wobei das Verfahren die folgenden Schritte umfasst:

- Ermitteln (11) von Hauptpunkten (21,22) des Informationssignals,
- Modifizieren (13) des Informationssignals durch Verschieben (23) von Hauptpunkten zu Positionen, in denen sie eine vorgegebene statistische Korrelation mit einem das angewandte Wasserzeichen darstellenden Signal aufweisen, **dadurch gekennzeichnet, dass** das Informationssignal (I(t)) ein eindimensionales Signal ist, dass das Wasserzeichensignal ein binäres, zeitabhängiges Signal ist, und dass der Schritt des Modifizierens des Informationssignals das Time-Warping (12) von Hauptpunkten umfasst, um mit einem vorgegebenen Wert des binären Wasserzeichensignals zu koinzidieren.

2. Verfahren zur Einbettung eines Wasserzeichens (W(t)) in ein Informationssignal I(t)), wobei das Verfahren die folgenden Schritte umfasst:

- Ermitteln von Hauptpunkten (21,22) des Informationssignals,
- Modifizieren (13) des Informationssignals durch Verschieben (23) von Hauptpunkten zu Positionen, in denen sie eine vorgegebene statistische Korrelation mit einem das angewandte Wasserzeichen darstellenden Signal aufweisen, **dadurch gekennzeichnet, dass** das Informationssignal (I(t)) ein eindimensionales Signal ist, dass das Wasserzeichensignal ein reellwertiges, zeitabhängiges Signal ist, und dass der Schritt des Modifizierens des Informationssignals das Time-Warping (12) von Hauptpunkten in der Richtung eines nächsten Maximums des Wasserzeichensignals umfasst.

3. Verfahren nach Anspruch 1 oder 2, welches weiterhin einen Verarbeitungsschritt des Ableitens eines robusten Signals (R(t)) von dem Informationssignal umfasst, welches die semantische Essenz des Informationssignals darstellt, wobei die Hauptpunkte des Informationssignals durch die Hauptpunkte (81,82) des robusten Signals dargestellt sind.

**4.** Verfahren nach Anspruch 3, wobei der Verarbeitungsschritt das Zerlegen des Informationssignals (I(t)) in mehrere robuste Signalkomponenten (R1,R2, ... RN) sowie das Ermitteln der Hauptpunkte (P) jeder Signalkomponente umfasst.

**5.** Verfahren nach Anspruch 4, wobei das Zerlegen eine Subband-Filterung (91) des Informationssignals (I(t)) enthält.

**6.** Verfahren nach Anspruch 4, wobei der Schritt des Modifizierens des Informationssignals das Modifizieren (103) jeder Signalkomponente und Kombinieren (102) der modifizierten Signalkomponenten umfasst, um das modifizierte Informationssignal zu bilden.

**7.** Verfahren zum Detektieren eines Wasserzeichens in einem Informationssignal (I(t)), wobei das Verfahren die folgenden Schritte umfasst:

- Ermitteln (11) von Hauptpunkten des Informationssignals,
- Ermitteln (14) der Korrelation der Hauptpunkte mit einem das angewandte Wasserzeichen darstellenden Signal (W(t)) sowie
- Detektieren (15), dass das angewandte Wasserzeichen in das Informationssignal eingebettet wurde, wenn die Korrelation einen vorgegebenen Schwellenwert überschreitet, **dadurch gekennzeichnet, dass** das, das angewandte Wasserzeichen darstellende Signal ein binäres, zeitabhängiges Signal ist, und dass der Schritt des Ermittelns der Korrelation das Ermitteln des Prozentsatzes von Hauptpunkten, die mit einem vorgegebenen Wert des binären Wasserzeichensignals koinzidieren, umfasst.

**8.** Verfahren nach Anspruch 7, welches weiterhin einen Verarbeitungsschritt des Ableitens eines robusten Signals von dem Informationssignal umfasst, welches die semantische Essenz des Informationssignals darstellt, wobei die Hauptpunkte des Informationssignals durch die Hauptpunkte des robusten Signals dargestellt sind.

**9.** Verfahren nach Anspruch 8, wobei der Verarbeitungsschritt das Zerlegen des Informationssignals in robuste Signalkomponenten sowie das Ermitteln der Hauptpunkte jeder Signalkomponente umfasst.

**10.** Verfahren nach Anspruch 9, wobei das Zerlegen eine Subband-Filterung des Informationssignals enthält.

**11.** Anordnung zur Einbettung eines Wasserzeichens (W(t)) in ein eindimensionales Signal (I(t)), mit:

- Mitteln (11) zum Ermitteln von Hauptpunkten des Informationssignals sowie
- Mitteln (13) zum Modifizieren des Informationssignals durch Verschieben von Hauptpunkten zu Positionen, in denen sie eine vorgegebene statistische Korrelation mit einem das angewandte Wasserzeichen darstellenden Signal aufweisen, **dadurch gekennzeichnet, dass** das Wasserzeichensignal ein binäres, zeitabhängiges Signal ist, und dass die Mittel zum Modifizieren des Informationssignals Mittel (12) zum Time-Warping von Hauptpunkten umfassen, um mit einem vorgegebenen Wert des binären Wasserzeichensignals zu koinzidieren.

**12.** Anordnung zum Detektieren eines Wasserzeichens (W(t)) in einem eindimensionalen Informationssignal (I(t)), mit:

- Mitteln (11) zum Ermitteln von Hauptpunkten des Informationssignals,
- Mitteln (14) zum Ermitteln der Korrelation der Hauptpunkte mit einem das angewandte Wasserzeichen darstellenden Signal (W(t)) sowie
- Mitteln (15) zum Detektieren, dass das angewandte Wasserzeichen in das Informationssignal eingebettet wurde, wenn die Korrelation einen vorgegebenen Schwellenwert überschreitet, **dadurch gekennzeichnet, dass** das, das angewandte Wasserzeichen darstellende Signal ein binäres, zeitabhängiges Signal ist, und dass die Mittel zum Detektieren Mittel zum Ermitteln des Prozentsatzes von Hauptpunkten, die mit einem vorgegebenen Wert des binären Wasserzeichensignals koinzidieren, umfassen.

**13.** Vorrichtung zur Aufzeichnung und/oder Wiedergabe eines Informationssignals, mit Mitteln (132) zur Deaktivierung der Aufzeichnung und/oder Wiedergabe des Informationssignals in Abhängigkeit des Vorhandenseins eines Wasserzeichens in dem Signal, **dadurch gekennzeichnet, dass** die Vorrichtung eine Anordnung (134) zum Detektieren des Wasserzeichens nach Anspruch 12 umfasst.

**Revendications**

1. Procédé d'insertion d'un filigrane (W(t)) dans un signal d'information (I(t)), comprenant les étapes consistant à :

   - déterminer (11) des points saillants (21, 22) du signal d'information,
   - modifier (13) le signal d'information par déplacement (23) de points saillants vers des positions où ils ont une corrélation statistique prédéterminée avec un signal de filigrane appliqué, **caractérisé en ce que** le signal d'information (I(t)) est un signal unidimensionnel, que le signal de filigrane est un signal binaire dépendant du temps et que l'étape de modification du signal d'information comprend la déformation temporelle (12) des points saillants de sorte à coïncider avec une valeur prédéterminée du signal de filigrane binaire.

2. Procédé d'insertion d'un filigrane (W(t)) dans un signal d'information (I(t)), comprenant les étapes consistant à :

   déterminer des points saillants (21, 22) du signal d'information,
   modifier (13) le signal d'information par déplacement (23) de points saillants vers des positions où ils ont une corrélation statistique prédéterminée avec un signal de filigrane appliqué, **caractérisé en ce que** le signal d'information (I(t)) est un signal unidimensionnel, que le signal de filigrane est un signal à valeur réelle dépendant du temps et que l'étape de modification du signal d'information comprend la déformation temporelle (12) des points saillants dans la direction d'un maximum le plus proche du signal de filigrane.

3. Procédé selon la revendication 1 ou 2, comprenant en outre une étape de traitement consistant à obtenir dudit signal d'information (I(t)) un signal robuste (R(t)) représentant l'essence sémantique du signal d'information, les points saillants du signal d'information étant représentés par les points saillants (81, 82) dudit signal robuste.

4. Procédé selon la revendication 3, dans lequel l'étape de traitement comprend la décomposition du signal d'information (I(t)) en une pluralité de composantes de signal robuste (R1, R2, ..., RN) et la détermination des points saillants (P) de chaque composante de signal.

5. Procédé selon la revendication 4, dans lequel ladite décomposition comprend le filtrage en sous-bandes (91) du signal d'information (I(t)).

6. Procédé selon la revendication 4, dans lequel l'étape consistant à modifier le signal d'information comprend la modification (103) de chaque composante de signal et la combinaison (102) des composantes de signal modifiées pour constituer le signal d'information modifié.

7. Procédé de détection d'un filigrane dans un signal d'information (I(t)), comprenant les étapes consistant à :

   - déterminer (11) des points saillants du signal d'information,
   - déterminer (14) la corrélation desdits points saillants avec un signal de filigrane appliqué (W(t)), et
   - détecter (15) que le filigrane appliqué a été incorporé dans ledit signal d'information si ladite corrélation dépasse un seuil prédéterminé, **caractérisé en ce que** le signal de filigrane appliqué est un signal binaire dépendant du temps et que l'étape de détermination de la corrélation comprend la détermination du pourcentage de points saillants qui coïncident avec une valeur prédéterminée du signal de filigrane binaire.

8. Procédé selon la revendication 7, comprenant en outre une étape de traitement consistant à obtenir dudit signal d'information un signal robuste représentant l'essence sémantique du signal d'information, les points saillants du signal d'information étant représentés par les points saillants dudit signal robuste.

9. Procédé selon la revendication 8, dans lequel l'étape de traitement comprend la décomposition du signal d'information en composantes de signal robuste et la détermination des points saillants de chaque composante de signal.

10. Procédé selon la revendication 9, dans lequel ladite décomposition comprend le filtrage en sous-bandes du signal d'information.

11. Arrangement pour insérer un filigrane (W(t)) dans un signal d'information unidimensionnel (I(t)), comprenant :

    - un moyen (11) pour déterminer des points saillants du signal d'information, et
    - un moyen (13) pour modifier le signal d'information, par déplacement de points saillants vers des positions où ils ont une corrélation statistique prédéterminée avec un signal de filigrane appliqué, **caractérisé en ce que** le signal de filigrane est un signal binaire dépendant du temps et que le moyen pour modifier le signal d'information comprend un moyen (12) pour déformer temporellement des points saillants de sorte à coïncider avec une valeur prédéterminée du signal de filigrane binaire.

12. Arrangement pour détecter un filigrane (W(t)) dans un signal d'information unidimensionnel (I(t)), comprenant :

- un moyen (11) pour déterminer des points saillants du signal d'information,
- un moyen (14) pour déterminer la corrélation desdits points saillants avec un signal de filigrane appliqué, et
- des moyens (15) pour détecter que le filigrane appliqué a été incorporé dans ledit signal d'information si ladite corrélation dépasse un seuil prédéterminé, **caractérisé en ce que** le filigrane est un signal binaire dépendant du temps et que les moyens de détection comprennent des moyens pour déterminer le pourcentage de points saillants qui coïncident avec une valeur prédéterminée du signal de filigrane binaire.

13. Dispositif pour enregistrer et/ou reproduire un signal d'information, comprenant des moyens (132) pour empêcher l'enregistrement et/ou la reproduction du signal d'information en fonction de la présence d'un filigrane dans ledit signal, **caractérisé en ce que** le dispositif comprend un arrangement (134) pour détecter ledit filigrane selon la revendication 12.

FIG.1

FIG.2

FIG.3

13

J(t) → [ 11 ] P(t) → [ 14 ] S1,S0 → [ 15 ] → Y/N

## FIG.4

I(t) → [ 16 ] R(t) → [ 11 ] P(t) → [ 12 ] v(t) → [ 13 ] I(t-v(t)) → Iw(t)

W(t) ↑ (into 12)

## FIG.5

J(t) → [ 16 ] R(t) → [ 11 ] P(t) → [ 14 ] S1,S0 → [ 15 ] → Y/N

## FIG.6

I(t)
R(t)

## FIG.7

W(t)

I(t)

R(f)

81  82  83

P(t)

84

Iw(t)=J(t)

R'(t)

85  86

P'(t)

FIG.8

FIG.9

FIG.10

## FIG.11

## FIG.12

## FIG.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9935836 A

- US 5933798 A